# FASCICULE DE BREVET EUROPEEN

(11) **EP 3 303 796 B1**
(45) Date de publication et mention de la délivrance du brevet: **10.04.2019**
(21) Numéro de dépôt: 16722220.7
(22) Date de dépôt: 12.05.2016
(51) Int. Cl.: F02B 37/02, F02B 37/10, F02B 37/16

(54) **DISPOSITIF POUR LE CONTRÔLE D'UNE QUANTITÉ D'AIR INTRODUIT À L'ADMISSION D'UN MOTEUR À COMBUSTION INTERNE SURALIMENTÉ ET LE REFROIDISSEMENT À L'ÉCHAPPEMENT - PROCÉDÉ UTILISANT UN TEL DISPOSITIF**
VORRICHTUNG ZUR STEUERUNG EINER MENGE AN LUFT, DIE ZUR KÜHLUNG VON ABGAS IN DEN EINLASS EINES AUFGELADENEN VERBRENNUNGSMOTORS GESPEIST WIRD, UND VERFAHREN ZUR VERWENDUNG SOLCH EINER VORRICHTUNG
DEVICE FOR CONTROLLING A QUANTITY OF AIR FED INTO THE INTAKE OF A SUPERCHARGED INTERNAL COMBUSTION ENGINE AND COOLING THE EXHAUST - METHOD USING SUCH A DEVICE

(30) Priorité: 28.05.2015 FR 1554834
(43) Date de publication de la demande: 11.04.2018
(73) Titulaire: IFP Energies nouvelles, 92500 Rueil-Malmaison (FR)
(72) Inventeur: COLLIOU, Thierry, 38138 Les Cotes D'arey (FR); WALTER, Bruno, 69700 Chassagny (FR)
(74) Mandataire: IFP Energies nouvelles
(86) Numéro de dépôt international: PCT/EP2016/060691
(87) Numéro de publication internationale: WO 2016/188761

(56) Documents cités:
- DE-A1- 2 438 162
- DE-A1- 2 906 182
- FR-A- 864 443
- FR-A5- 2 202 534
- GB-A- 2 438 360
- JP-A- S57 200 618
- US-A- 3 102 381
- US-A- 4 534 173

## Description

La présente invention se rapporte à un dispositif de contrôle de la quantité d'air introduite à l'admission d'un moteur à combustion interne suralimenté, notamment d'un moteur stationnaire ou pour un véhicule automobile ou industriel, et à un procédé de contrôle de la quantité d'air pour un tel moteur. En particulier, lorsque des conduits de transfert partiel d'air comprimé aboutissent aux soupapes d'échappement par la culasse du moteur.

Comme cela est largement connu, la puissance délivrée par un moteur à combustion interne est dépendante de la quantité de carburant introduite dans la chambre de combustion, elle-même dépendant de la quantité d'air introduite dans la chambre de combustion de ce moteur, quantité d'air qui est également proportionnelle à la densité de cet air.

Ainsi, il est habituel d'augmenter cette quantité d'air au moyen d'une compression de l'air extérieur avant qu'il ne soit admis dans cette chambre de combustion. Cette opération, appelée suralimentation, peut être réalisée par tous moyens, tel qu'un turbocompresseur ou un compresseur entraîné, qui peut être centrifuge ou volumétrique.

Dans le cas d'une suralimentation par un turbocompresseur, ce dernier comprend une turbine rotative, à simple flux ou à double flux, reliée par un axe à un compresseur rotatif. Les gaz d'échappement issus du moteur traversent la turbine qui est alors entrainée en rotation. Cette rotation est ensuite transmise au compresseur qui, de par sa rotation, comprime l'air extérieur avant qu'il ne soit introduit dans la chambre de combustion.

Comme cela est mieux décrit dans la demande de brevet français N° 2 478 736, il est prévu, pour pouvoir amplifier de manière significative cette quantité d'air comprimé dans la chambre de combustion du moteur, d'augmenter encore plus la compression de l'air extérieur par le compresseur.

Cela se réalise plus particulièrement en augmentant la vitesse de rotation de la turbine et donc du compresseur.

Pour cela, une partie de l'air comprimé sortant du compresseur est déviée pour être admis directement à l'entrée de la turbine en se mélangeant avec les gaz d'échappement. Cette turbine est alors traversée par une plus grande quantité de fluide (mélange d'air comprimé et de gaz d'échappement), ce qui permet d'augmenter la vitesse de rotation de la turbine et par conséquence du compresseur. Cette augmentation de vitesse du compresseur permet ainsi d'augmenter la pression de l'air extérieur qui sera comprimé dans ce compresseur puis introduit dans la chambre de combustion du moteur.

Par cela, l'air comprimé a une densité plus élevée ce qui permet d'accroitre la quantité d'air contenue dans la chambre de combustion.

Ce type de moteur suralimenté, bien que donnant satisfaction, présente néanmoins des inconvénients non négligeables.

En effet, le débit de l'air comprimé qui est admis à l'entrée de la turbine n'est pas correctement contrôlé, ce qui peut entrainer un dysfonctionnent du moteur.

Ainsi, à titre d'exemple, en cas de trop grande quantité d'air comprimé déviée à l'entrée de la turbine, les gaz d'échappement entrant dans la turbine sont refroidis de manière trop importante par cet air et amène une diminution du rendement global de la suralimentation.

Le document DE2906182A1 décrit un moteur à combustion interne équipé d'un turbocompresseur. Selon la figure 11 le moteur comprend un conduit de transfert partiel de l'air comprimé du compresseur vers les conduits d'échappement qui débouchent dans des entrées de la turbine. Le document US4534173A1 montre également un moteur à combustion interne équipé d'un turbocompresseur. Selon la figure 2 un conduit de transfert partiel de l'air comprimé du compresseur débouche dans la culasse au niveau d'une soupape d'échappement.

La présente invention se propose de remédier aux inconvénients mentionnés ci-dessus grâce à un dispositif de contrôle de la quantité d'air introduit à l'admission d'un moteur à combustion interne suralimenté qui permet de répondre à toutes les demandes de puissance du moteur. De plus, le mode de réalisation de la présente invention se propose à faire des modifications de la culasse du moteur de façon à ce que les conduits de transfert partiel d'air comprimé aboutissent dans le voisinage des soupapes d'échappement, ce qui favorise en plus leur refroidissement. La boucle d'air comprimé conventionnelle n'est pas modifiée.

L'invention ici présentée permet également de réaliser un transfert de l'air comprimé de l'admission vers l'échappement même quand la pression moyenne de l'air comprimé à l'admission est inférieure à celle des gaz à l'échappement. Il suffit uniquement qu'il existe des phases durant le cycle de fonctionnement du moteur où la pression à l'admission est supérieure à celle existant à l'échappement.

A cet effet, la présente invention concerne un dispositif de contrôle de la quantité d'air introduit à l'admission d'un moteur à combustion interne suralimenté, ledit moteur comprenant deux sorties de gaz d'échappement reliées chacune à un collecteur d'échappement d'un groupe d'au moins un cylindre, ledit dispositif comprenant un dispositif de suralimentation comportant un turbocompresseur avec une turbine à double entrée connectée auxdites sorties de gaz d'échappement ainsi qu'un compresseur d'air extérieur, et au moins un conduit de transfert partiel de l'air comprimé du compresseur vers les entrées de la turbine, caractérisé en ce que le conduit transfert partiel débouche dans la culasse de la motorisation au niveau d'une soupape d'échappement reliée aux entrées de la turbine et comporte des moyens de vannage contrôlant la circulation de l'air comprimé transféré.

Le conduit de transfert partiel peut comporter un clapet antiretour (80, 82).

Le dispositif peut comporter un conduit de transfert partiel débouchant au niveau des soupapes d'échappement de chacun des pistons.

Les conduits de transfert partiel peuvent être en communication avec une conduite de liaison qui dérive une partie de l'air comprimé en sortie du compresseur.

La conduite de liaison peut comporter deux branches reliées auxdits conduits de transfert partiel.

Les moyens de vannage peuvent comprendre des vannes proportionnelles.

Le dispositif peut comporter des moyens de commande des vannes proportionnelles.

Ledit conduit de liaison peut comporter une conduite de dérivation vers la conduite d'admission en aval du refroidissement et une vanne trois voies.

L'invention concerne également un procédé de contrôle de la quantité d'air comprimé à l'admission d'un moteur à combustion interne suralimenté, ledit moteur comprenant deux sorties de gaz d'échappement reliées chacune à un collecteur d'échappement d'un groupe d'au moins un cylindre, ledit dispositif comprenant un dispositif de suralimentation avec un turbocompresseur avec une turbine à double entrée connectée auxdites sorties de gaz d'échappement ainsi qu'un compresseur d'air extérieur, et au moins un conduit de transfert partiel de l'air comprimé du compresseur vers les entrées de la turbine, caractérisé en ce qu'il consiste à faire déboucher ledit conduit dans la culasse de la motorisation au niveau d'une soupape d'échappement reliée aux entrées de la turbine et à introduire par ledit conduit une partie de l'air comprimé sortant du compresseur dans les entrées de gaz d'échappement de la turbine.

Le procédé peut consister à disposer un conduit de transfert au niveau des soupapes de chacun des pistons et à contrôler la circulation de l'air comprimé dans chacun des conduits par des moyens de vannage.

Le procédé peut consister à contrôler la température de l'air de dérivation au moyen d'un conduit de court-circuit et d'une vanne trois voies.

Les autres caractéristiques et avantages de l'invention vont apparaître à la lecture de la description qui va suivre, donnée à titre uniquement illustratif et non limitatif, et à laquelle sont annexées :
- la figure 1 qui illustre un moteur à combustion interne avec une représentation schématique du principe du dispositif de suralimentation selon l'invention ;
- la figure 2 qui montre plus précisément un mode de réalisation du moteur à combustion interne avec son dispositif de suralimentation comprenant des conduits de transfert partiel aboutissant directement aux soupapes d'échappement,
- la figure 3 qui montre un exemple de réalisation de présence par usinage dans la culasse de la motorisation.

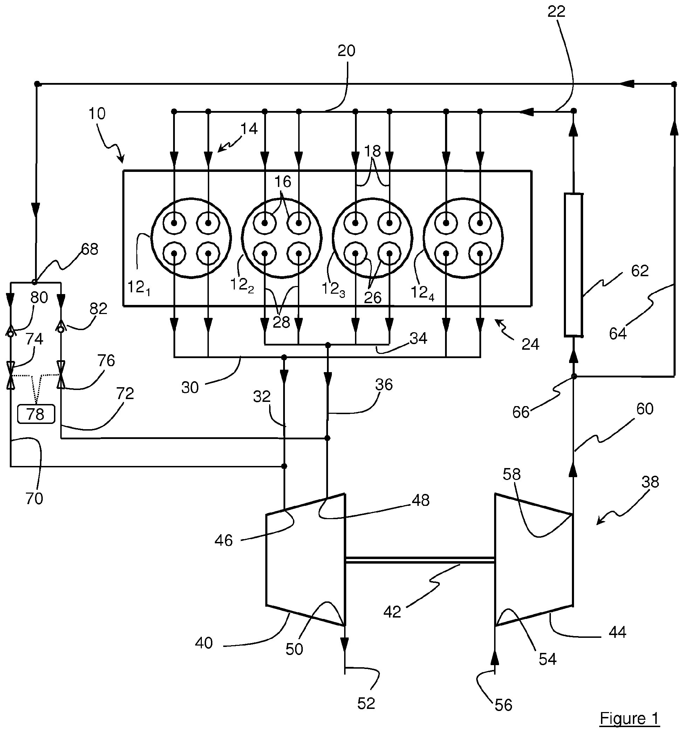

Sur la figure 1, le moteur à combustion interne 10 comprend au moins deux cylindres, ici quatre cylindres référencés 12₁ à 12₄ à partir de la gauche de la figure.

De manière préférentielle, ce moteur est un moteur à combustion interne à injection directe, notamment de type Diesel, mais cela n'écarte en aucune manière tout autre type de moteur à combustion interne.

Chaque cylindre comprend des moyens d'admission 14 avec au moins une soupape d'admission 16, ici deux soupapes d'admission contrôlant chacune une tubulure d'admission 18. Les tubulures d'admission 18 aboutissent à un collecteur d'admission 20 alimenté par un conduit d'alimentation 22 en air d'admission, tel que de l'air comprimé.

Ce cylindre comprend aussi des moyens d'échappement des gaz brûlés 24 avec au moins une soupape d'échappement 26, ici également deux soupapes contrôlant chacune une tubulure d'échappement 28.

Dans l'exemple illustré le moteur est prévu pour fonctionner selon un ordre de combustion dénommé 1-3-4-2. Compte tenu de cet ordre de combustion, les tubulures d'échappement du premier cylindre 12₁ et deuxième cylindre 12₄, qui forment un premier groupe d'au moins un cylindre, sont connectées à un premier collecteur d'échappement 30 avec une première sortie de gaz d'échappement 32. Les tubulures d'échappement du troisième et quatrième 12₂ et 12₃, qui forment un deuxième groupe d'au moins un cylindre, sont connectées à un deuxième collecteur d'échappement 34 qui comporte une deuxième sortie de gaz d'échappement 36.

Les deux sorties de gaz d'échappement aboutissent à un turbocompresseur 38 pour la compression de l'air et plus particulièrement à la turbine de détente 40 de ce turbocompresseur.

Comme illustré sur la figure 1, le turbocompresseur est un turbocompresseur à double entrée, plus connu sous le vocable de turbocompresseur "Twin Scroll".

Ce type de turbocompresseur comprend la turbine de détente 40 balayée par les gaz d'échappement et qui est reliée en rotation par un arbre 42 avec un compresseur 44.

Au niveau de la turbine, l'entrée des gaz d'échappement est divisée en deux sections, une première section d'entrée 46 raccordée à la première sortie de gaz d'échappement 32 du premier collecteur 30 et une deuxième section d'entrée 48 raccordée à la deuxième sortie de gaz d'échappement 36 du deuxième collecteur d'échappement 34.

L'évacuation de gaz 50 de la turbine 40 est raccordée conventionnellement à la ligne d'échappement 52 du moteur.

Le compresseur 44 du turbocompresseur 38 comporte une admission d'air extérieur 54 alimentée par une conduite d'alimentation 56. La sortie d'air comprimé 58 de ce compresseur est reliée au conduit d'alimentation 22 du collecteur d'admission 20 par une conduite 60.

Avantageusement, il peut être prévu de placer un radiateur de refroidissement de l'air comprimé 62 sur la conduite 60, entre le compresseur et la conduite 22.

Comme mieux visible sur la figure 1, un conduit de transfert 64 permet de faire circuler une partie de l'air comprimé sortant du compresseur 44 vers les entrées 46 et 48 de la turbine.

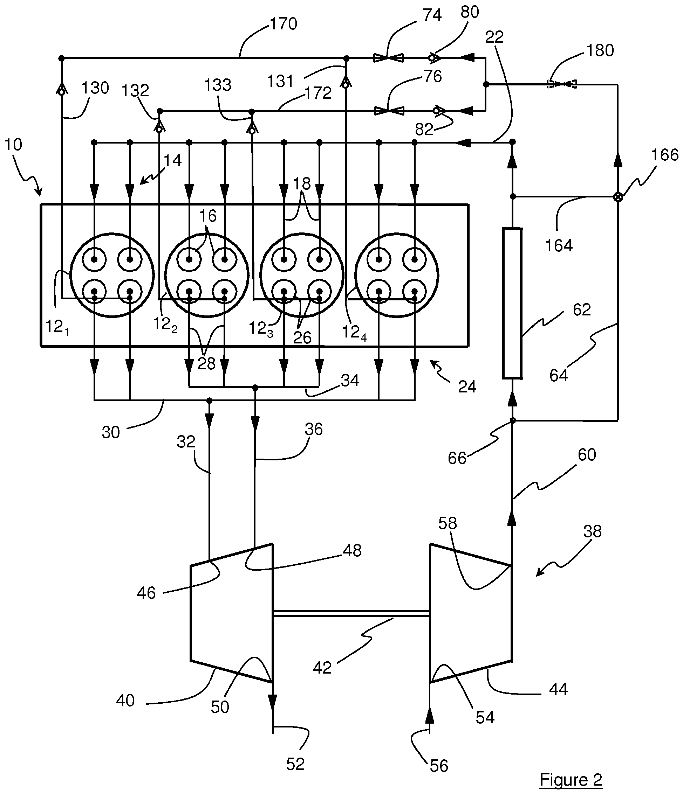

Cette configuration représentée sur la figure 1 permet de mieux comprendre le principe de l'invention en décrivant clairement les différents circuits d'air comprimé, cependant la présente invention est de préférence réalisée selon la figure 2 où les conduits de transfert partiel, ou dit « de balayage », aboutissent aux soupapes d'échappement, dans la culasse du moteur.

Selon la figure 1, le conduit de transfert partiel prend naissance sur la conduite 60, à un point de d'intersection 66 entre le compresseur et le radiateur de refroidissement 62, et se sépare ensuite, à partir d'un point de bifurcation 68, en deux branches 70 et 72. La branche 70 aboutit à l'entrée 46 de la turbine par sa jonction avec la première sortie de gaz d'échappement 32 et la branche 72 aboutit à l'autre entrée 48 de cette turbine par sa jonction avec la sortie de gaz d'échappement 36.

Chaque branche porte des moyens de vannage 74 et 76, comme une vanne proportionnelle, commandés par un moyen de commande 78, qui peut être commun aux deux moyens de vannage. Cette vanne permet ainsi de contrôler la circulation de l'air comprimé qui circule dans la branche.

Avantageusement, chaque branche comporte également un clapet anti-retour 80 et 82, qui a pour avantage d'être rapide et capable de s'ouvrir et se fermer plusieurs fois par cycle moteur. Ce clapet interdit la circulation de l'air comprimé de la branche vers le compresseur tout en empêchant la mise en communication des deux branches.

Cette configuration permet ainsi, pendant le fonctionnement du moteur et ce à l'échelle du cycle moteur, de profiter des zones de basse pression échappement régnant ponctuellement dans les collecteurs d'échappement pour introduire de l'air comprimé dans la turbine et augmenter ainsi le débit de cette turbine et par conséquent du compresseur. Cela permet également d'avoir une suralimentation plus efficace pour les bas régimes.

Durant le fonctionnement, en cas de besoin d'air en grande quantité dans les cylindres, les vannes 74 et 76 sont commandées en ouverture pour introduire de l'air comprimé provenant du compresseur 44 dans la turbine 40.

L'air comprimé sortant du compresseur 44 circule dans le conduit 64 puis dans les branches 70 et 72 pour aboutir aux entrées de gaz d'échappement 46 et 48 de la turbine 40 en y apportant un surplus de fluide à cette turbine.

Ainsi, la turbine est parcourue non seulement par les gaz d'échappement venant des sorties 32 et 36, mais également par de l'air comprimé qui vient s'ajouter à ces gaz. De ce fait, la rotation de la turbine est augmentée, ce qui entraine une augmentation de rotation du compresseur et, en conséquence, une augmentation de la pression de l'air comprimée qui sort de ce compresseur.

Bien entendu, les vannes 74 et 76 sont contrôlées par le moyen de commande 78 de façon à admettre la quantité d'air comprimé dans la turbine qui répond aux besoins de suralimentation du moteur.

La figure 2 décrit en exemple un mode de réalisation selon l'invention.

Ici, la boucle d'air comprimé à l'admission du moteur n'est pas modifiée entre la sortie du compresseur 38 et les tubulures d'admission 18. Egalement, la boucle d'échappement, et notamment la partie qui alimente la turbine 40, n'est pas modifiée.

La réalisation de la présente invention porte sur la présence de conduits de transfert partiel d'air comprimé qui débouchent dans le corps de la culasse de la motorisation, au niveau des soupapes d'échappement. Ainsi, au niveau de chacun des pistons 12₁, 12₂, 12₃, 12₄, un conduit de transfert partiel 130, 131, 132, 133 débouche dans la culasse au niveau des soupapes d'échappement.

L'arrivée d'air comprimé au droit des soupapes par usinage dans la culasse favorise le refroidissement de l'ensemble du conduit d'échappement et notamment des queues de soupapes.

De plus, les gaz aux entrées de la turbine sont mieux homogénéisés et on évite ainsi des gradients de température importants.

Enfin, on limite ainsi les pertes thermiques de l'ensemble du conduit d'échappement et du collecteur en abaissant la température du conduit d'échappement dès les soupapes.

Sur les conduits de transfert partiel, on dispose une vanne 76-74 de contrôle du débit d'air et un clapet anti-retour pour éviter le reflux des gaz d'échappement dans l'admission. Ce clapet peut être disposé en amont ou aval de la vanne, ou même être intégré à la vanne 76-74.

Les conduits de transfert partiel d'air comprimé aboutissant à des soupapes reliées au même collecteur, 30 ou 34, se rejoignent dans une conduite 170-172 constituant les deux branches de la conduite de liaison 64 en dérivation en aval du compresseur 44. Les moyens de vannage peuvent être constitués de deux vannes 74-76, notamment proportionnelles, disposées chacune sur les deux branches 170 et 172. Des clapets anti-retour 80-82 équipent les deux branches pour éviter un retour des gaz d'échappement dans l'admission.

Dans une variante, une seule vanne 180, notamment proportionnelle également, disposée sur le conduit de liaison 64 permet le contrôle du débit d'air comprimé en circulation dans les conduits de transfert partiel.

Dans une autre variante, un conduit de court-circuit 164 permet d'envoyer, ou de soutirer, un débit d'air comprimé contrôlé par une vanne trois voies 166 sur le conduit de liaison 64. Ce conduit de dérivation permet de contrôler la température d'air comprimé de balayage par un mélange d'air en amont et en aval du refroidisseur d'air de suralimentation 62.

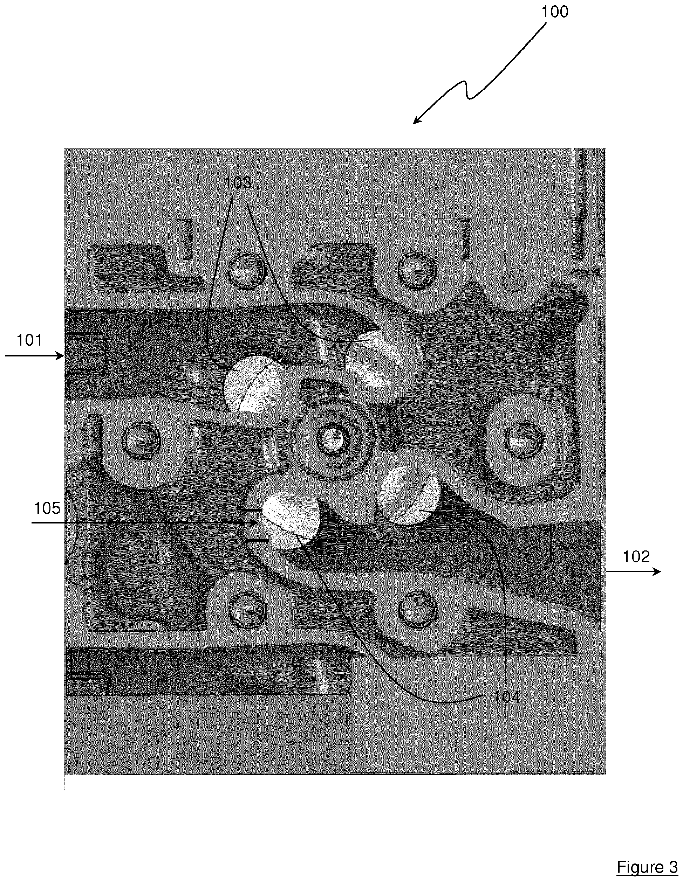

La figure 3 montre une coupe schématique dans la culasse 100 d'un moteur. Les références 101 et 102 représentent respectivement les conduits d'admission et d'échappement qui amènent aux soupapes d'admission 103 et d'échappement 104.

La flèche 105 représente schématiquement l'usinage de l'arrivée d'un conduit de transfert partiel au niveau des soupapes d'échappement. Selon les types de culasse, cet usinage peut être un perçage ou être prévu à la coulée de fonderie de la culasse.

Ce schéma représente une disposition de soupapes que l'on retrouve classiquement sur les motorisations industrielles. Ainsi il est possible d'intégrer facilement une arrivée d'air comme mentionné ci-dessus

Les modes de réalisation ne se limitent à ceux exemplifiés sur la figure 2, les autres dispositions équivalentes dans la culasse de conduits de transfert peuvent être envisagées, notamment en fonction du type de culasse ou de motorisation.

On peut notamment prévoir une arrivée de l'air court-circuité dans une semelle accolée à la culasse en sortie culasse avec un guidage de l'air vers l'intérieur du conduit via un usinage ou une tuyauterie spécifique

## Revendications

1. Dispositif de contrôle de la quantité d'air introduit à l'admission d'un moteur à combustion interne suralimenté, ledit moteur comprenant deux sorties de gaz d'échappement (32, 36) reliées chacune à un collecteur d'échappement (30, 34) d'un groupe d'au moins un cylindre (12₁, 12₂, 12₃, 12₄), ledit dispositif comprenant un dispositif de suralimentation (38) comportant un turbocompresseur avec une turbine (40) à double entrée (46, 48) connectée auxdites sorties de gaz d'échappement ainsi qu'un compresseur (44) d'air extérieur, et au moins un conduit de transfert partiel de l'air comprimé du compresseur vers les entrées de la turbine, **caractérisé en ce que** le conduit de transfert partiel (130, 131, 132, 133) débouche dans la culasse de la motorisation au niveau d'une soupape d'échappement reliée aux entrées de la turbine et comporte des moyens de vannage (74, 76) contrôlant la circulation de l'air comprimé transféré.

2. Dispositif selon la revendication 1, **caractérisé en ce que** le conduit de transfert partiel comporte un clapet antiretour (80, 82).

3. Dispositif selon la revendication 1 ou 2, caractérisé en qu'il comporte un conduit de transfert partiel (130, 131, 132, 133) débouchant au niveau des soupapes d'échappement de chacun des pistons (12₁, 12₂, 12₃, 12₄).

4. Dispositif selon la revendication 3, caractérisé en que lesdits conduits de transfert partiel sont en communication avec une conduite de liaison (64) qui dérive une partie de l'air comprimé en sortie du compresseur (44).

5. Dispositif selon la revendication 4, caractérisé en que ladite conduite de liaison comporte deux branches (170, 172) reliées auxdits conduits de transfert partiel (130, 131, 132, 133).

6. Dispositif selon l'une des revendications précédentes, caractérisé en que les moyens de vannage comprennent des vannes proportionnelles (74, 76).

7. Dispositif selon la revendication 6, **caractérisé en ce qu'**il comporte des moyens de commande (78) des vannes proportionnelles.

8. Dispositif selon l'une des revendications 4 à 7, **caractérisé en ce que** ledit conduit de liaison (64) comporte une conduite de dérivation (164) vers la conduite d'admission (22) en aval du refroidissement (62) et une vanne trois voies (166).

9. Procédé de contrôle de la quantité d'air comprimé à l'admission d'un moteur à combustion interne suralimenté, ledit moteur comprenant deux sorties de gaz d'échappement (32, 36) reliées chacune à un collecteur d'échappement (30, 34) d'un groupe d'au moins un cylindre (12₁, 12₂, 12₃, 12₄), ledit dispositif comprenant un dispositif de suralimentation (38) avec un turbocompresseur avec une turbine (40) à double entrée (46, 48) connectée auxdites sorties de gaz d'échappement ainsi qu'un compresseur (44) d'air extérieur, et au moins un conduit de transfert partiel (100 ; 101) de l'air comprimé du compresseur vers les entrées de la turbine, **caractérisé en ce qu'**il consiste à faire déboucher ledit conduit dans la culasse de la motorisation au niveau d'une soupape d'échappement reliée aux entrées de la turbine et à introduire par ledit conduit une partie de l'air comprimé sortant du compresseur dans les entrées (46, 48) de gaz d'échappement de la turbine (40).

10. Procédé selon la revendication 9, **caractérisé en ce qu'**il consiste à disposer un conduit de transfert partiel (130, 131, 132, 133) au niveau des soupapes de chacun des pistons (12₁, 12₂, 12₃, 12₄) et à contrôler la circulation de l'air comprimé dans chacun des conduits par des moyens de vannage (74, 76).

11. Procédé selon la revendication 9, caractérisé ce qu'il consiste à contrôler la température de l'air de dérivation au moyen d'un conduit de court-circuit (164) et d'une vanne trois voies (166).

## Patentansprüche

1. Vorrichtung zur Kontrolle der Luftmenge, die am Einlass eines aufgeladenen Verbrennungsmotors eingeleitet wird, wobei der Motor zwei Abgasauslässe (32, 36) umfasst, die jeweils mit einem Abgaskrümmer (30, 34) einer Gruppe von mindestens einem Zylinder (12₁, 12₂, 12₃, 12₄) verbunden sind, wobei die Vorrichtung eine Aufladeeinrichtung (38) umfasst, umfassend einen Turbolader mit einer Turbine (40) mit doppeltem Einlauf (46, 48), die an die Abgasauslässe angeschlossen ist, sowie einen Außenluftverdichter (44) und mindestens eine Teiltransferleitung der verdichteten Luft vom Verdichter zu den Einläufen der Turbine, **dadurch gekennzeichnet, dass** die Teiltransferleitung (130, 131, 132, 133) in den Zylinderkopf der Motorisierung im Bereich eines Ablassventils, das mit den Einläufen der Turbine verbunden ist, mündet und Ventilmittel (74, 76) umfasst, die die Zirkulation der weitergeleiteten verdichteten Luft kontrollieren.

2. Vorrichtung nach Anspruch 1, **dadurch gekennzeichnet, dass** die Teiltransferleitung eine Rückschlagklappe (80, 82) umfasst.

3. Vorrichtung nach Anspruch 1 oder 2, **dadurch gekennzeichnet, dass** sie eine Teiltransferleitung (130, 131, 132, 133) umfasst, die im Bereich der Ablassventile jedes der Kolben (12₁, 12₂, 12₃, 12₄) mündet.

4. Vorrichtung nach Anspruch 3, **dadurch gekennzeichnet, dass** die Teiltransferleitungen mit einer Verbindungsleitung (64) in Verbindung stehen, die einen Teil der verdichteten Luft am Ausgang des Verdichters (44) liefert.

5. Vorrichtung nach Anspruch 4, **dadurch gekennzeichnet, dass** die Verbindungsleitung zwei Schenkel (170, 172) umfasst, die mit den Teiltransferleitungen (130, 131, 132, 133) verbunden sind.

6. Vorrichtung nach einem der vorhergehenden Ansprüche, **dadurch gekennzeichnet, dass** die Ventilmittel Proportionalventile (74, 76) umfassen.

7. Vorrichtung nach Anspruch 6, **dadurch gekennzeichnet, dass** sie Steuermittel (78) der Proportionalventile umfasst.

8. Vorrichtung nach einem der Ansprüche 4 bis 7, **dadurch gekennzeichnet, dass** die Verbindungsleitung (64) eine Zweigleitung (164) zu der Einlassleitung (22) stromabwärts zur Kühlung (62) und ein Dreiwegeventil (166) umfasst.

9. Verfahren zur Kontrolle der Luftmenge am Einlass eines aufgeladenen Verbrennungsmotors, wobei der Motor zwei Abgasauslässe (32, 36) umfasst, die jeweils mit einem Abgaskrümmer (30, 34) einer Gruppe von mindestens einem Zylinder (12₁, 12₂, 12₃, 12₄) verbunden sind, wobei die Vorrichtung eine Aufladeeinrichtung (38) umfasst, umfassend einen Turbolader mit einer Turbine (40) mit doppeltem Einlauf (46, 48), die an die Abgasauslässe angeschlossen ist, sowie einen Außenluftverdichter (44) und mindestens eine Teiltransferleitung (100; 101) der verdichteten Luft vom Verdichter zu den Einläufen der Turbine, **dadurch gekennzeichnet, dass** es darin besteht, die Leitung in den Zylinderkopf der Motorisierung im Bereich eines Ablassventils, das mit den Einläufen der Turbine verbunden ist, münden zu lassen durch die Leitung einen Teil der aus dem Verdichter austretenden verdichteten Luft in die Abgaseinläufe (46, 48) der Turbine (40) einzuleiten.

10. Verfahren nach Anspruch 9, **dadurch gekennzeichnet, dass** es darin besteht, eine Teiltransferleitung (130, 131, 132, 133) im Bereich der Ventile jedes der Kolben (12₁, 12₂, 12₃, 12₄) anzuordnen und die Zirkulation der verdichteten Luft in jeder der Leitung durch Ventilmittel (74, 76) zu kontrollieren.

11. Verfahren nach Anspruch 9, **dadurch gekennzeichnet, dass** es darin besteht, die Temperatur der abgezweigten Luft mit Hilfe einer Kurzschlussleitung (164) und eines Dreiwegeventils (166) zu kontrollieren.

## Claims

1. Device for controlling the quantity of air fed into the intake of a supercharged internal combustion engine, said engine comprising two exhaust gas outputs (32, 36) each linked to an exhaust manifold (30, 34) of a group of at least one cylinder (12₁, 12₂, 12₃, 12₄) , said device comprising a supercharging device (38) comprising a turbocompressor with a connected to said exhaust gas outputs and an outside air compressor (44), and at least one duct for partial transfer of the compressed air from the compressor to the inputs of the turbine, **characterized in that** the partial transfer duct (130, 131, 132, 133) emerges in the engine cylinder head at an exhaust valve linked to the inputs of the turbine and comprises valve means (74, 76) controlling the circulation of the transferred compressed air.

2. Device according to Claim 1, **characterized in that** the partial transfer duct comprises a non-return valve (80, 82).

3. Device according to Claim 1 or 2, **characterized in that** it comprises a partial transfer duct (130, 131, 132, 133) emerging at the exhaust valves of each of the pistons (12₁, 12₂, 12₃, 12₄) .

4. Device according to Claim 3, **characterized in that** said partial transfer ducts are connected with a link duct (64) which diverts a part of the compressed air to the output of the compressor (44).

5. Device according to Claim 4, **characterized in that** said link duct comprises two branches (170, 172) linked to said partial transfer ducts (130, 131, 132, 133).

6. Device according to one of the preceding claims, **characterized in that** the valve means comprise proportional valves (74, 76).

7. Device according to Claim 6, **characterized in that** it comprises control means (78) for the proportional valves.

8. Device according to one of Claims 4 to 7, **characterized in that** said link duct (64) comprises a bypass duct (164) to the intake duct (22) downstream of the cooling (62) and a three-way valve (166).

9. Method for controlling the quantity of compressed air at the intake of a supercharged internal combustion engine, said engine comprising two exhaust gas outputs (32, 36) each linked to an exhaust manifold (30, 34) of a group of at least one cylinder (12₁, 12₂, 12₃, 12₄) , said device comprising a supercharging device (38) with a turbocompressor with a turbine (40) with two inputs (46, 48) connected to said exhaust gas outputs and an outside air compressor (44), and at least one partial transfer duct (100; 101) for the compressed air from the compressor to the inputs of the turbine, **characterized in that** it consists in having said duct emerge in the motor cylinder head at an exhaust valve linked to the inputs of the turbine and in feeding through said duct a portion of the compressed air leaving the compressor into the exhaust gas inputs (46, 48) of the turbine (40).

10. Method according to Claim 9, **characterized in that** it consists in arranging a partial transfer duct (130, 131, 132, 133) at the valves of each of the pistons (12₁, 12₂, 12₃, 12₄) and in controlling the circulation of the compressed air in each of the ducts by valve means (74, 76).

11. Method according to Claim 9, **characterized in that** it consists in controlling the temperature of the bypass air by means of a short-circuit duct (164) and a three-way valve (166).
